# EUROPÄISCHE PATENTSCHRIFT

(11) **EP 3 509 192 B1**
(45) Veröffentlichungstag und Bekanntmachung des Hinweises auf die Patenterteilung: **10.03.2021**
(21) Anmeldenummer: 19150214.5
(22) Anmeldetag: 03.01.2019
(51) Int. Cl.: H02K 1/27, H02K 7/04, H02K 7/14, H02K 15/16

(54) **AUSSENLÄUFER-ROTOR EINER PUMPE UND VERFAHREN ZUR HERSTELLUNG EINES AUSSENLÄUFER-ROTORS**
OUTER ROTOR OF A PUMP AND METHOD FOR PRODUCING AN OUTER ROTOR
ROTOR EXTÉRIEUR D'UNE POMPE ET PROCÉDÉ DE FABRICATION D'UN ROTOR EXTÉRIEUR

(30) Priorität: 09.01.2018 DE 102018200202
(43) Veröffentlichungstag der Anmeldung: 10.07.2019
(73) Patentinhaber: Volkswagen Aktiengesellschaft, 38436 Wolfsburg (DE)
(72) Erfinder: Weber, Dennis, 38159 Vechelde (DE); Kujat, Sergej, 38304 Wolfenbüttel (DE); Bachmann, Stephan, 38855 Wernigerode (DE); Boseniuk, Florian, 30629 Hannover (DE)

(56) Entgegenhaltungen:
- EP-A2- 2 453 138
- FR-A1- 2 503 950

## Beschreibung

Die Erfindung betrifft einen Außenläufer-Rotor einer Pumpe gemäß dem Oberbegriff des Anspruchs 1. Die Erfindung betrifft ferner ein Verfahren zur Herstellung eines solchen Außenläufer-Rotors.

Aus EP 2 453 138 A2 ist ein Diagonalventilator mit einem Außenrotor bekannt. An dem Außenrotor ist ein Laufrad mit Flügeln angeordnet. In dem Laufrad ist ein rohrförmiges Rückschlussteil aus einem ferromagnetischem Werkstoff angeordnet. Innerhalb des rohrförmigen Teils ist ein Hohlraum gebildet, in welchen ein topfenartiger magnetischer Rückschluss mit daran angeordneten Magneten eingesetzt ist.

Aus der noch nicht veröffentlichten Patentanmeldung DE 10 2017 204 947 sind ein Außenläufer-Rotor einer Pumpe gemäß dem Oberbegriff des Anspruchs 1 und ein Verfahren zur Herstellung eines Außenläufer-Rotors gemäß dem Oberbegriff des Anspruchs 9 bekannt. Bei der Herstellung von den in diesem Dokument beschriebenen Außenläufer-Rotoren kann es zu Schwierigkeiten in Verbindung mit der Fertigung der Ummantelung der Magnetelemente und des Rückschlusselements mit einer Schutzschicht oder einem Schutzmantel aus Kunststoff kommen. Problematisch ist es insbesondere, wenn es zu einer ungewünschten Krafteinwirkung auf das Rückschlusselement und dadurch resultierend zu Bauteilspannungen oder sogar zu einer Verformung des Rückschlusselementes kommt. Darüber hinaus kann es im Falle der Ausbildung einer sich über den gesamten Umfang und in axialer Richtung über eine große Länge erstreckenden Schutzmantel aus Kunststoff problematisch sein, wenn während der Fertigung Teile des Schutzmantels teilweise erhärten, bevor der Schutzmantel vollständig erzeugt wurde. Dies kann zu einer ungleichmäßigen Dicke des Schutzmantels oder zu einer unvollständigen Ausbildung des Schutzmantels führen.

Der Erfindung liegt die Aufgabe zugrunde, einen Außenläufer-Rotor einer Pumpe sowie ein Verfahren zur Herstellung eines solchen Außenläufer-Rotors zur Verfügung zu stellen, mittels welchen die Herstellung verbessert und unerwünschten Krafteinwirkungen auf das Rückschlusselement und/oder Bauteilspannungen und Verformungen entgegengewirkt wird.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Ein erfindungsgemäßer Außenläufer-Rotor einer Pumpe umfasst einen Laufradabschnitt mit mehreren Laufradschaufeln und einen Antriebsabschnitt. Der Außenläufer-Rotor ist vorzugsweise für eine Radialpumpe vorgesehen. Es wird insoweit auch explizit auf Radialpumpen mit einem solchen Außenläufer-Rotor verwiesen. Die Anmelderin behält sich vor, zu einem späteren Zeitpunkt Schutz für solche Radialpumpen zu beanspruchen. Der Außenläuferrotor weist in einer praktischen Ausführungsform mehrere Laufradschaufeln auf, vorzugsweise bogenförmig gekrümmte Laufradschaufeln, und weiter bevorzugt Laufradschaufeln, die alle in der gleichen Richtung gekrümmt und/oder gleichmäßig über den Umfang des Antriebsabschnitts verteilt angeordnet sind.

Ebenfalls bevorzugt ist es, wenn die Laufradschaufeln jeweils beabstandet zueinander derart angeordnet sind, dass sich benachbarte Laufradschaufeln nicht berühren.

Der Vollständigkeit halber wird darauf verwiesen, dass die Abstände zwischen zwei Laufradschaufeln und/oder die Krümmungen der einzelnen Laufradschaufeln auch unterschiedlich ausgebildet sein können.

In dem Antriebsabschnitt ist mindestens ein, sich zumindest über einen radial äußeren Teil des Umfangs des Antriebsabschnitts erstreckendes Magnetelement derart angeordnet, dass der Antriebsabschnitt über den Umfang verteilt mindestens zweipolig magnetisiert ist. Das mindestens eine Magnetelement ist ferner radial außenseitig von einem Rückschlusselement umgeben. Unter einem Rückschlusselement im Sinne der Erfindung wird insbesondere ein Magnetkreis-Rückschlusselement verstanden, welches ein- oder mehrteilig aus einem ferromagnetischen Werkstoff gebildet sein kann. Das Rückschlusselement ist selbst radial außenseitig von einer Schutzschicht aus einem Kunststoff vollständig ummantelt. Die Schutzschicht kann insoweit auch als Schutzmantel bezeichnet werden. Durch die Schutzschicht aus Kunststoff werden das Rückschlusselement sowie das mindestens eine Magnetelement vor Kontakt mit Fluiden (insbesondere Gasen und Flüssigkeiten) geschützt, und somit wird einem vorzeitigen Verschleiß bzw. einer Korrosion dieser Bauteile vorgebeugt.

Es ist vorteilhaft, wenn das mindestens eine Magnetelement mit einer Passivierung versehen ist, welche die Lebensdauer des Magnetelements weiter erhöht. Bei der Passivierung handelt es sich insbesondere um eine Nickel-Kupfer-Nickel-Beschichtung. Das Rückschlusselement ist erfindungsgemäß als geschlossenes Ringelement ausgebildet und im Bereich eines in axialer Richtung zum Laufradabschnitt orientierten Endes über den gesamten Umfang dichtend gegenüber dem Antriebsabschnitt angeordnet.

Unter einer dichtenden Anordnung im Sinne der Erfindung ist insbesondere eine Anordnung zu verstehen, welche wirksam verhindert, dass bei einem Kunststoff-Spritzgießvorgang zur Erzeugung der Schutzschicht Kunststoff in den Bereich zwischen Rückschlusselement und Antriebsabschnitt in einer Art und Weise und in einer Menge eindringt, dass die Funktion, Qualität und/oder Langlebigkeit des Außenläuferrotors dadurch beeinträchtigt wird. Vorzugsweise ist die Anordnung derart dichtend ausgelegt, dass während des Kunststoff-Spritzgießvorgang kein Kunststoff die dichtende Anordnung durchdringt. So kann der Entstehung ungewünschter Kräfte entgegengewirkt werden, insbesondere der Entstehung von durch in einen Bereich innenseitig des Rückschlusselements eingedrungenen Kunststoff verursachte, in radialer Richtung betrachtet von innen nach außen auf das Rückschlusselement wirkender Kräfte. Auch einer elastischen oder plastischen Verformung des Rückschlusselements und/oder des mindestens einen Magnetelements kann mit einem erfindungsgemäßen Außenläufer-Rotor so wirksam entgegengewirkt werden. Nur der Vollständigkeit halber wird darauf verwiesen, dass sekundär auch Folgeerscheinungen vermieden werden, wie z.B. akustische Auffälligkeiten oder eine verringerte Leistung und/oder ein erhöhter Verschleiß einer Pumpe oder einer Lagerbuchse einer Pumpe aufgrund einer Unwucht.

In Verbindung mit dem erfindungsgemäßen Außenläufer-Rotor wird insbesondere auf elektrische Pumpen zur Förderung von Fluid mit einem solchen Außenläufer-Rotor verwiesen. Bei dem genannten Fluid kann es sich insbesondere um Wasser, Öl, Kraftstoff oder Kühlmittel handeln. Explizit verwiesen wird auch auf Kühlkreisläufe von Verbrennungskraftmaschinen mit derartigen elektrischen Pumpen, insbesondere auf Kühlkreisläufe von Abgasrückführungsanlagen von Verbrennungskraftmaschinen. Betreffend die genannten Pumpen und den Aufbau solcher Pumpen wird vollumfänglich auf die Offenbarung der in der Beschreibungseinleitung genannten DE 10 2017 204 947 verwiesen.

Ein dichtende Anordnung im Sinne der Erfindung umfasst sowohl eine unmittelbar aneinander anliegende Anordnung von Rückschlusselement und Antriebsabschnitt im Bereich eines in axialer Richtung zum Laufradabschnitt orientierten Endes sowie eine beabstandete Anordnung, welche dadurch dichtend ausgebildet ist, dass in dem verbleibenden Zwischenraum oder Spalt mindestens ein geeignetes Dichtelement eingesetzt ist. Hinsichtlich einer unmittelbar aneinander anliegenden Anordnung wird auch auf die Möglichkeit verwiesen, dass eine L-förmige oder labyrinthartige Struktur vorgesehen sein kann, um einem Eindringen von Kunststoff durch mindestens einen oder mehrere Richtungswechsel im Bereich der aneinander anliegenden Elemente zusätzlich entgegenzuwirken.

In einer besonders einfachen und praktischen Ausführungsform weist bei einer bereits ausreichend dichtenden Anordnung im Sinne der Erfindung das Rückschlusselement eine obere Radial-Anlagefläche auf, mit welcher das Rückschlusselement über den gesamten Umfang an dem Antriebsabschnitt anliegt. Die obere Radial-Anlagefläche ist insbesondere in der oberen, dem Laufradabschnitt zugewandten Hälfte des Rückschlusselements ausgebildet, vorzugsweise in dem oberen Drittel, und erstreckt sich insbesondere ausgehend von dem in Richtung des Laufradabschnitts orientierten Endes des Rückschlusselements. Das Wort "Radial" in der Bezeichnung Radial-Anlagefläche wurde verwendet, weil die Radial-Anlagefläche in radialer Richtung "bewegt" bzw. mittels einer geeigneten elastischen Auslegung versehen sein muss, um mit der sich in radialer Richtung anschließenden Fläche des Antriebsabschnitts geeignet "dichtend" zur Anlage zu kommen. Dazu kann es beispielsweise vorgesehen sein, dass das Rückschlusselement mit Spannung auf den Antriebsabschnitt aufgeschoben wird. Die Radial-Anlagefläche selbst erstreckt sich in axialer Richtung, vorzugsweise in rein axialer Richtung parallel zur Drehachse des Außenläufer-Rotors.

Insbesondere erstreckt sich die obere Radial-Anlagefläche in axialer Richtung über eine Länge von mindestens einem Millimeter, bevorzugt mindestens 2 Millimetern und weiter bevorzugt mindestens 3 Millimetern oder mindestens 5 Millimetern. Es ist bevorzugt, wenn die sich in axialer Richtung erstreckende Länge der Radial-Anlagefläche mindestens so groß ist wie die Dicke der Schutzschicht, welche sich in radialer Richtung betrachtet außenseitig der Radial-Anlagefläche des Rückschlusselements erstreckt.

Alternativ oder in Ergänzung zu einer oberen Radial-Anlagefläche weist der erfindungsgemäße Außenläufer-Rotor eine untere Radial-Anlagefläche auf, mit welcher der Außenläufer-Rotor über den gesamten Umfang an dem Antriebsabschnitt anliegt. Mittels einer unteren Radial-Anlagefläche wird eine dichtende Anordnung des Rückschlusselements weiter verbessert. Die untere Radial-Anlagefläche ist insbesondere in der unteren, dem Laufradabschnitt abgewandten Hälfte des Rückschlusselements ausgebildet, vorzugsweise im unteren Drittel, und insbesondere erstreckt sich die untere Radial-Anlagefläche ausgehend von einem von dem Laufradabschnitt abgewandten Ende des Rückschlusselements.

Insbesondere sind die obere Radial-Anlagefläche und/oder die untere Radial-Anlagefläche so ausgebildet, dass die Magnetelemente radial oberseitig bzw. unterseitig überragt werden, so dass sich damit eine das mindestens eine Magnetelement umklammernde Anordnung ergibt. Für diese Zwecke weist das Rückschlusselement vorzugsweise eine im Querschnitt L-förmige oder U-förmige Geometrie auf.

In einer weiteren praktischen Ausführungsform des erfindungsgemäßen Außenläufer-Rotors weist die Außenkontur des Rückschlusselements in einem sich über einen Teil der sich in axialer Richtung erstreckenden Länge eine Zylindermantelfläche auf, und ausgehend von der Zylindermantelfläche schließt sich ein in axialer Richtung - zum Laufradabschnitt orientiert - kegelstumpfartig ausgebildeter Abschnitt an.

Dabei erstreckt sich die Zylindermantelfläche insbesondere überwiegend oder ausschließlich in axialer Richtung. Der Winkel, den die Zylindermantelfläche und der kegelstumpfartig ausgebildete Abschnitt einschließen, liegt vorzugsweise jeweils einschließlich zwischen 10° und 40°, besonders bevorzugt zwischen 20° und 30°. Vorteilhaft an einer Gestaltung der Außenkontur des Rückschlusselements mit einer Zylindermantelfläche und einem kegelstumpfartig ausgebildeten Abschnitt ist, dass beim Umspritzen des Rückschlusselements mit der Schutzschicht aus Kunststoff durch den auftreffenden, und mit entsprechendem Druck eingespritzten Kunststoff die von außen auf den kegelstupfartig ausgebildeten Abschnitt wirkende Kraft das Rückschlusselement zusätzlich an den Antriebsabschnitt anpresst und so die Dichtwirkung verbessert. Durch Auswahl eines geeigneten Winkels kann - abhängig von der Position und Ausrichtung der Einspritzstellen - ein vorteilhaftes Verhältnis zwischen der Befüllung der Kunststoffspritzgießform und der vorstehend erläuterten Krafteinwirkung zur Abdichtung gewählt werden.

In Zusammenhang mit einer wie vorstehend beschriebenen Gestaltung der Außenkontur mit kegelstumpfartig ausgebildetem Abschnitt und zylindermantelförmigem Abschnitt ist es bevorzugt, wenn die Dicke der Schutzschicht, welche das Rückschlusselement im Bereich der Zylindermantelfläche in radialer Richtung betrachtet außenseitig umgibt, um maximal 50% von der Dicke der Schutzschicht abweicht, die den kegelstumpfartig ausgebildeten Abschnitt in radialer Richtung betrachtet außenseitig umgibt. Als Dicke der Schutzschicht wird dabei die Erstreckung der Schutzschicht senkrecht zur jeweiligen Außenkontur des Rückschlusselements verstanden. Insbesondere weicht die Dicke der Schutzschicht im Bereich der Zylindermantelfläche um maximal 30%, bevorzugt maximal 20% und besonders bevorzugt maximal 10% von der Dicke der Schutzschicht im Bereich des kegelstumpfartig ausgebildeten Abschnitts ab. Besonders bevorzugt ist es, wenn die Dicke der Schutzschicht im Bereich der Zylindermantelfläche gleich groß ist wie die Dicke im Bereich des kegelstumpfartig ausgebildeten Abschnitts.

Zur Erzielung einer wie vorstehend beschriebenen Geometrie sind insbesondere ein Spritzgießwerkzeug und das Rückschlusselement entsprechend aufeinander abgestimmt. Bei den angegebenen Dickenverhältnissen, insbesondere einer zumindest annähernd gleich großen Dicke im Bereich der Zylindermantelfläche und im Bereich des kegelstumpfartig ausgebildeten Abschnitts, wird ein für die Herstellung vorteilhaftes Fließverhalten des Kunststoffes beim Umspritzungsprozess erzielt, insbesondere eine geeignete Ausbreitung des Kunststoffs in alle Richtungen. Vorzugsweise sind die Dicken so aufeinander abgestimmt, dass sich der Kunststoff ausgehend von den Einspritzstellen in Längsrichtung und in Umfangsrichtung jeweils ungefähr gleichmäßig verteilt. Die Dicke kann insoweit als Auslegungsparameter für den Fließwiderstand eingesetzt werden, weil der Fließwiderstand von dem Abstand zwischen dem Spritzgießwerkzeug und dem Rückschlusselement unmittelbar abhängt.

In einer weiteren praktischen Ausführungsform ist an einem dem Laufradabschnitt abgewandten - insbesondere an einem unteren - Ende des Antriebsabschnitts eine sich über den gesamten Umfang erstreckende Stufenkontur mit einer sich in radialer Richtung erstreckenden Axial-Anlagefläche und einer sich in axialer Richtung erstreckenden Radial-Anlagefläche für das Rückschlusselement ausgebildet. Die Stufenkontur dient damit zum einen zur Abdichtung, nämlich indem das Rückschlusselement sowohl in axialer Richtung, als auch in radialer Richtung an dem Antriebsabschnitt anliegt, und damit kein Kunststoff von dem dem Laufradabschnitt abgewandten Ende des Rückschlusselements zwischen das Rückschlusselement und den Antriebsabschnitt gelangen kann. Zum anderen dient die Stufenkontur auch als radiale Abstützung des Rückschlusselements. In radialer Richtung betrachtet von außen nach innen auf das Rückschlusselement wirkende Kräfte werden durch die sich in axialer Richtung erstreckende Radial-Anlagefläche vollumfänglich abgestützt.

Die Qualität einer dichtenden Anordnung des Rückschlusselements gegenüber dem Antriebsabschnitt kann weiter verbessert werden, wenn das Rückschlusselement kraftschlüssig auf dem Antriebsabschnitt fixiert ist. Eine kraftschlüssige Fixierung kann insbesondere durch Aufpressen des Rückschlusselements auf den Antriebsabschnitt realisiert werden, so dass sich zwischen Rückschlusselement und Antriebsabschnitt ein Presssitz ergibt.

Eine dichtende Anordnung kann darüber hinaus weiter verbessert werden, wenn der Antriebsabschnitt im Bereich der oberen Radial-Anlagefläche und/oder unteren Radial-Anlagefläche eine zylindrische Außenkontur aufweist, d.h. eine glattflächige, zylindermantelförmige Außenkontur. Die zylindermantelförmige, glattflächige Außenkontur ist vorzugsweise über den gesamten Umfang ausgebildet und erstreckt sich zumindest über eine gewisse Länge in rein axialer Richtung. In diesem Fall kann eine unmittelbare und vollflächige Anlage der oberen Radial-Anlagefläche bzw. der unteren Radial-Anlagefläche an dem Antriebsabschnitt in einfacher Weise und mit einfacher geometrischer Ausprägung erzielt werden.

In einer weiteren praktischen Ausführungsform eines erfindungsgemäßen Außenläufer-Rotors sind an dem Antriebsabschnitt Aufnahmestrukturen für Magnetelemente ausgebildet, welche zur formschlüssigen und/oder kraftschlüssigen Aufnahme des mindestens einen Magnetelements an dem Antriebsabschnitt ausgebildet sind. Solche Aufnahmestrukturen können unter anderem in Form von Taschen oder Mulden oder axial verlaufenden Rippen ausgebildet oder angeordnet sein. Insbesondere können Aufnahmestrukturen korrespondierend zu den Magnetelementen derart ausgebildet sein, dass die Magnetelemente darin einpressbar sind und dann klemmend von den Aufnahmestrukturen gehalten werden. Vorzugsweise sind Aufnahmestrukturen einstückig an dem Antriebsabschnitt ausgebildet, insbesondere angespritzt, d.h. in einer geeigneten Kunststoff-Spritzgussform als Außenkontur vorgegeben. Mit solchen Aufnahmestrukturen kann eine lagegenaue Anordnung und Fixierung der Magnetelemente an dem Antriebsabschnitt sowie eine einfache Montage bewirkt werden. Besonders bevorzugt sind die Aufnahmestrukturen in einem mittleren Bereich so ausgebildet oder angeordnet, dass diese in axialer Richtung betrachtet zwischen einer oberen, dem Laufradabschnitt zugewandten Radial-Anlagefläche und einer unteren, dem Laufradabschnitt abgewandten Radial-Anlagefläche des Rückschlusselements positioniert sind.

Die Erfindung betrifft auch ein Verfahren zur Herstellung eines wie vorstehend beschriebenen Außenläufer-Rotors. In einem ersten Verfahrensschritt wird der Antriebsabschnitt hergestellt. Anschließend wird das mindestens eine Magnetelement sowie das Rückschlusselement gegenüber dem Antriebsabschnitt positioniert. In einem nächsten Verfahrensschritt wird ein Spritzgießwerkzeug derart gegenüber dem Antriebsabschnitt mit dem mindestens einen Magnetelement und dem Rückschlusselement angeordnet, dass der Abstand zwischen einem Zylindermantelabschnitt des Rückschlusselements und einem ersten Abschnitt einer Innenfläche des Spritzgießwerkzeuges um maximal 50 % von dem Abstand zwischen einem kegelstumpfartig ausgebildeten Abschnitt des Rückschlusselements und einem zweiten Abschnitt der Innenfläche des Spritzgießwerkzeuges abweicht. Der Abstand wird dabei jeweils senkrecht zur Innenfläche des Spritzgießwerkzeuges bestimmt. Anschließend wird die Schutzschicht mittels Spritzgießen zur Ummantelung des Rückschlusselements in das Spritzgießwerkzeug gegeben. Der Abstand zwischen dem Zylindermantelabschnitt des Rückschlusselements und dem ersten Abschnitt der Innenfläche weicht insbesondere um maximal 30% - bevorzugt um maximal 20% und vorzugsweise um maximal 10% - von dem Abstand zwischen dem kegelstumpfartig ausgebildeten Abschnitt und dem zweiten Abschnitt der Innenfläche ab. Es ist ebenfalls bevorzugt, wenn die Abstände genau gleich ausgebildet sind, d.h. die Abweichung 0 ist.

Die Innenfläche des Spritzgießwerkzeuges erstreckt sich insbesondere parallel zu der Außenkontur des Rückschlusselements im Bereich des Zylindermantelabschnitts und im Bereich des kegelstumpfartig ausgebildeten Abschnitts des Rückschlusselements. Die Innenfläche des Spritzgießwerkzeuges kann auch so gestaltet sein, dass der Fließwiderstand des Kunststoffes während des Einspritzvorgangs ungefähr konstant gehalten werden kann. Dazu kann die Dicke der Schutzschicht, ausgehend von einer Einspritzstelle, mit zunehmender Entfernung von der Einspritzstelle geringfügig anwachsend ausgelegt sein. Vorzugsweise ist der Außenläufer-Rotor so ausgelegt, dass sich bei der Herstellung der Schutzschicht mittels eines Kunststoff-Spritzgießverfahrens der Kunststoff zunächst ungefähr gleichmäßig in axialer Richtung ausgehend von einer Einspritzstelle nach oben und nach unten verteilt und dann ungefähr gleichmäßig weiter in Umfangsrichtung. Zu vermeiden sind Auslegungen, welche dazu führen, dass in einem bestimmten axialen Bereich der Kunststoff sich schon über den gesamten Umfang verteilt hat, bevor er einen anderen axialen Bereich überhaupt erst erreicht hat oder bevor der Kunststoff sich in einem anderen axialen Bereich erst deutlich weniger über den Umfang ausgebreitet hat, beispielsweise weniger als 70 Prozent, weniger als 50 Prozent oder weniger als 30 Prozent.

In einer praktischen Ausführungsform des erfindungsgemäßen Verfahrens ist das Spritzgießwerkzeug mindestens zweiteilig ausgebildet, wobei ein erster Teil und ein zweiter Teil des Spritzgießwerkzeuges derart angeordnet werden, dass eine Werkzeugtrennebene in radialer Richtung verläuft und die Werkzeugtrennebene zwischen dem ersten Teil und dem zweiten Teil in axialer Richtung betrachtet im Bereich eines Übergangs zwischen dem Zylindermantelabschnitt und dem sich daran anschließenden kegelstumpfartig ausgebildeten Abschnitt des Rückschlusselements angeordnet ist. Die Geometrien des ersten Teils und des zweiten Teils sind damit besonders einfach und ermöglichen eine leichte Entformung nach dem Spritzprozess.

Die Anspritzung des Kunststoffes erfolgt insbesondere auf Höhe der Werkzeugtrennebene. Der Kunststoff breitet sich dann vorzugsweise in axialer Richtung betrachtet ausgehend von der Anspritzstelle gleichmäßig über den Zylindermantelabschnitt und den kegelstumpfartig ausgebildeten Abschnitt aus. Es werden über den Umfang verteilt vorzugsweise mehrere Anspritzstellen vorgesehen, insbesondere mindestens zwei und vorzugsweise drei oder vier oder auch fünf Anspritzstellen, um eine gleichmäßige Verteilung des Kunststoffes über den Umfang und die Länge des Rückschlusselements zu erleichtern.

Weitere praktische Ausführungsformen der Erfindung sind nachfolgend im Zusammenhang mit den Zeichnungen beschrieben. Es zeigen:
- Fig. 1: einen der Anmelderin aus nicht vorveröffentlichtem Stand der Technik bekannten Außenläufer-Rotor mit einem Rückschlusselement und einer Gleitlagerbuchse in einer Explosionsdarstellung,
- Fig. 2: den Außenläufer-Rotor aus Fig. 2 mit einer Schutzschicht in einem Querschnitt,
- Fig. 3: einen erfindungsgemäßen Außenläufer-Rotor in einer perspektivischen Ansicht,
- Fig. 4: den Außenläufer-Rotor aus Fig. 3 mit einem Rückschlusselement, einer Gleitlagerbuchse und einer Schutzschicht in einem Querschnitt, und
- Fig. 5: den in Fig. 4 mit V gekennzeichneten Bereich in einer vergrößerten Darstellung.

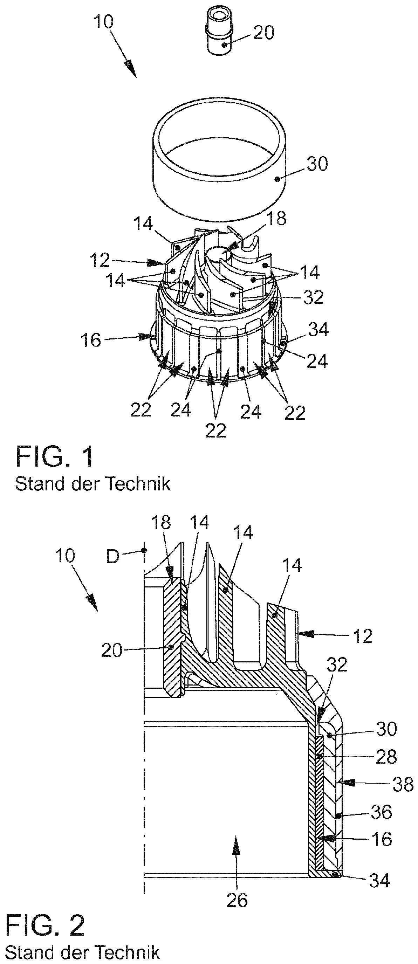

In Fig. 1 ist ein aus dem Stand der Technik bekannter Außenläufer-Rotor 10 dargestellt. Der Außenläufer-Rotor 10 umfasst einen Laufradabschnitt 12 mit mehreren Laufradschaufeln 14 und einen Antriebsabschnitt 16. Der Laufradabschnitt 12 und der Antriebsabschnitt 16 sind einstückig aus Kunststoff ausgebildet. Die Laufradschaufeln 14 sind in dem gezeigten Ausführungsbeispiel so angeordnet, dass sich diese von einer Außenseite in radialer Richtung und in Umfangsrichtung nach innen erstrecken, sich aber weder innenseitig noch außenseitig berühren.

Zur drehbaren Lagerung des Außenläufer-Rotors 10 um eine Drehachse D weist der Außenläufer-Rotor 10 eine Durchgangsöffnung 18 auf. In diese Durchgangsöffnung 18 ist eine Gleitlagerbuchse 20 aus einem reibungsreduzierenden Material eingebracht, um die Reibung zwischen der Drehachse D und dem Laufradabschnitt 12 des Außenläufer-Rotors 10 zu verringern. Die Gleitlagerbuchse 20 kann insbesondere aus einem Polyphenylensulfid (PPS) hergestellt sein, vorzugsweise aus PPS CF 30.

An dem Antriebsabschnitt 16 sind Aufnahmestrukturen 22 zum Einsetzen von Magnetelementen 28 (vgl. Fig. 2) durch axial verlaufende Rippen 24 ausgebildet. Der Abstand der Rippen 24 zueinander ist so ausgelegt, dass die Magnetelemente 28 klemmend zwischen den Rippen 24 einsetzbar sind und in dieser Position fixiert werden. Ferner ist die Länge der Rippen 24 derart ausgelegt, dass diese in axialer Richtung sowohl in Richtung des Laufradabschnittes 12 als auch dem Laufradabschnitt 12 abgewandt über die Magnetelemente 28 herausragen. In dieser Ausführungsform sind sechszehn Aufnahmestrukturen 22 gleichmäßig über den Umfang des Antriebsabschnitts 16 verteilt ausgebildet. In diese Aufnahmestrukturen 22 werden Magnetelemente 28 mit jeweils unterschiedlicher Ausrichtung von Nordpol und Südpol (nicht dargestellt) eingesetzt, so dass sich in bekannter Art und Weise über den Umfang eine alternierende Anordnung von positiven und negativen Polen ergibt. In dem Antriebsabschnitt 22 ist eine Öffnung 26 ausgebildet (vgl. Fig. 2), welche zur Anordnung eines Stators (nicht dargestellt) vorgesehen ist.

Für den Aufbau einer Pumpe mit einem Außenläufer-Rotor 10 wird auch in Ergänzung vollumfänglich auf die DE 10 2017 204 947 verwiesen, insbesondere auf die Figurenbeschreibung.

Radial außenseitig der Magnetelemente 28 ist ein Rückschlusselement 30 aus einem ferromagnetischen Werkstoff angeordnet. Das Rückschlusselement 30 ist als geschlossenes Ringelement in Form einer Hülse ausgebildet. Es wird bei der Montage so über die Magnetelemente 28 geschoben, dass die Außenseite der Magnetelemente 28 mit der Innenseite des Rückschlusselements 30 in direktem Kontakt steht (vgl. auch Fig. 2).

In Fig. 2 ist eine Hälfte des Außenläufer-Rotors 10 im Querschnitt dargestellt. Wie gut zu erkennen ist, weist das Rückschlusselement 30 einen sich in axialer Richtung erstreckenden Zylindermantelabschnitt 38 auf und ist an seinem zu dem Laufradabschnitt 12 orientierten Ende in radialer Richtung nach innen verjüngt und nach innen gekrümmt ausgebildet. Dadurch sind die Magnetelemente 28 zumindest teilweise von der Oberseite her umschlossen. Durch die Anlage des Rückschlusselements 30 auf den in Umfangsrichtung verteilt ausgebildeten Rippen 24 ist oberhalb der Magnetelemente 28 ein Spalt 32 zwischen dem Antriebsabschnitt 16 und dem Rückschlusselement 30 ausgebildet.

Der Antriebsabschnitt 16 weist an dem unteren, dem Laufradabschnitt 12 abgewandten Ende einen umlaufenden in radialer Richtung hervorragenden Kragen 34 auf, der die Magnetelemente 28 und das Rückschlusselement 30 von unten umgibt. Dieser Kragen 34 bildet einen unteren Anschlag in axialer Richtung für das Rückschlusselement 30, wenn dieses in Richtung der Drehachse D über die Magnetelemente 28 geschoben wird.

In Fig. 2 ist der Außenläufer-Rotor 10 mit einer Schutzschicht 36 aus Kunststoff dargestellt. Die Schutzschicht 36 ist vorliegend durch Umspritzen mit Kunststoff erzeugt und ummantelt sämtliche Magnetelemente 28 und das Rückschlusselement 30. Die Schutzschicht 36 ist dabei so angespritzt, dass sie bündig mit dem Kragen 34 des Antriebsabschnitts 16 abschließt. Damit sind die Magnetelemente 28 und das Rückschlusselement 30 innerhalb der Schutzschicht 36 angeordnet und vor Kontakt mit einem Fluid geschützt. Die Schutzschicht 36 weist im Bereich des Zylindermantelabschnitts 38 des Rückschlusselements 30 eine geringere Dicke auf als in dem darüber liegenden Bereich.

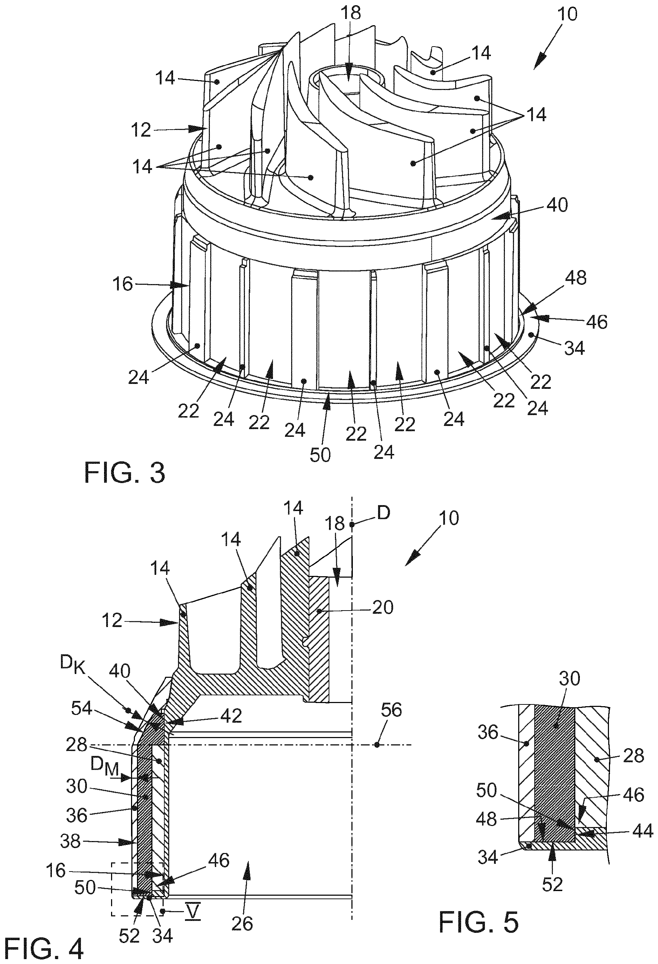

In Verbindung mit den Fig. 3 bis 5 wird im Folgenden auf Details der Gestaltung eines erfindungsgemäßen Außenläufer-Rotors 10 eingegangen, wobei überwiegend auf die Unterschiede gegenüber dem in den Fig. 1 und 2 dargestellten Außenläufer-Rotor 10 eingegangen wird. Für identische oder zumindest funktionsgleiche Elemente werden zur Beschreibung der erfindungsgemäßen Ausführungsform dieselben Bezugszeichen verwendet, wie zur Beschreibung des Standes der Technik.

Auch der in den Fig. 3 bis 5 gezeigte Außenläufer-Rotor 10 weist einen Antriebsabschnitt 16 und einen Laufradabschnitt 12 auf, wobei auch hier an dem Antriebsabschnitt 16 Aufnahmestrukturen 22 zur Aufnahme von Magnetelementen 28 ausgebildet sind. Die Rippen 24 zur Bildung der Aufnahmestrukturen 22 erstrecken sich vorliegend über eine Länge, die der Länge der Magnetelemente 28 (nicht dargestellt) entspricht. Die Rippen 24 weisen maximal die gleiche Länge wie die Magnetelemente 28 auf. Oberhalb der Aufnahmestrukturen 22 weist der Antriebsabschnitt 16 eine zylindrische Außenkontur 40 mit einer zylindermantelförmigen Außenfläche auf.

Das Rückschlusselement 30 ist als geschlossenes Ringelement ausgebildet und umgibt den Antriebsabschnitt 16 mit den daran angeordneten Magnetelementen 28 über den gesamten Umfang.

In den Schnittdarstellungen der Fig. 4 und Fig. 5 sind weitere Details des Rückschlusselements 30 zu erkennen. So weist das Rückschlusselement 30 insbesondere an einem zu dem Laufradabschnitt 12 orientierten Ende eine obere Radial-Anlagefläche 42 auf, welche sich in axialer Richtung erstreckt und über den gesamten Umfang unmittelbar an der zylindrischen Außenkontur 40 des Antriebsabschnitts 16 oberhalb der Magnetelemente 28 anliegt. Ein Spalt 32, wie er bei dem in Fig. 2 dargestellten Außenläufer-Rotor 10 gemäß Stand der Technik zwischen dem Rückschlusselement 30 und dem Antriebsabschnitt 16 erkennbar ist, ist bei dem erfindungsgemäßen Außenläufer-Rotor 10 durch eine dichtende Anordnung des Rückschlusselements 30 an dem Antriebsabschnitt 16 ersetzt worden.

Wie in Fig. 5 gut zu erkennen ist, weist das Rückschlusselement 30 ferner eine untere Radial-Anlagefläche 44 auf, welche mit einer sich über den gesamten Umfang des Antriebsabschnitts 16 erstreckenden Stufenkontur 46 zusammenwirkt. Die Stufenkontur 46 weist eine sich in radialer Richtung erstreckende Axial-Anlagefläche 48 und eine sich in radialer Richtung erstreckende Radial-Anlagefläche 50 für das Rückschlusselement 30 auf. Die untere Radial-Anlagefläche 44 des Rückschlusselements 30 wirkt dabei mit der Radial-Anlagefläche 50 der Stufenkontur 46 zusammen. Zusätzlich wirkt die Axial-Anlagefläche 48 der Stufenkontur 46 mit einer unteren Axial-Anlagefläche 52 des Rückschlusselements 30 zusammen, wodurch hier eine L-förmige dichtende Anordnung mit einem Richtungswechsel hergestellt ist.

Die Außenkontur des Rückschlusselements 30 weist einen sich in axialer Richtung erstreckenden Zylindermantelabschnitt 38 auf, an welchen sich ein in axialer Richtung zum Laufradabschnitt 12 orientierter kegelstumpfartig ausgebildeter Abschnitt 54 anschließt. Das Rückschlusselement 30 ist außenseitig vollständig von einer Schutzschicht 36 aus Kunststoff ummantelt. Die Dicke D_{M} der Schutzschicht 36 außenseitig des Zylindermantelabschnitts 38 ist gleich groß wie die Dicke D_{K} der Schutzschicht 36 außenseitig des kegelstumpfartig ausgebildeten Abschnitts 54.

Die Ummantelung des Rückschlusselements 30 mit der Schutzschicht 36 erfolgt durch Umspritzen im Kunststoff-Spritzgießverfahren. Dabei wird ein zweiteiliges Spritgießwerkzeug verwendet (nicht dargestellt), wobei die durch die horizontal verlaufenden, gestrichelte Linie symbolisierte Werkzeugtrennebene 56 zwischen einem ersten Teil und einem zweiten Teil des Spritzgusswerkzeuges in axialer Richtung auf Höhe eines Übergangs zwischen dem Zylindermantelabschnitt 38 und dem kegelstumpfartig ausgebildeten Abschnitt 54 verläuft.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

### Bezugszeichenliste

- 10: Außenläufer-Rotor
- 12: Laufradabschnitt
- 14: Laufradschaufel
- 16: Antriebsabschnitt
- 18: Durchgangsöffnung
- 20: Gleitlagerbuchse
- 22: Aufnahmestruktur
- 24: Rippe
- 26: Öffnung
- 28: Magnetelement
- 30: Rückschlusselement
- 32: Spalt
- 34: Kragen
- 36: Schutzschicht
- 38: Zylindermantelabschnitt
- 40: Außenkontur (Antriebsabschnitt)
- 42: obere Radial-Anlagefläche (des Rückschlusselements)
- 44: untere Radial-Anlagefläche (des Rückschlusselements)
- 46: Stufenkontur
- 48: Axial-Anlagefläche (der Stufenkontur)
- 50: Radial-Anlagefläche (der Stufenkontur)
- 52: untere Axial-Anlagefläche (des Rückschlusselements)
- 54: kegelstumpfartig ausgebildeter Abschnitt
- 56: Werkzeugtrennebene

## Patentansprüche

1. Außenläufer-Rotor einer Pumpe umfassend einen Laufradabschnitt (12) mit mehreren Laufradschaufeln (14) und einen Antriebsabschnitt (16), in welchem mindestens ein, sich zumindest über einen radial außenseitigen Teil des Umfangs des Antriebsabschnitts (16) erstreckendes Magnetelement (28) derart angeordnet ist, dass der Antriebsabschnitt (16) über den Umfang verteilt mindestens zweipolig magnetisiert ist, wobei das mindestens eine Magnetelement (28) radial außenseitig von einem Rückschlusselement (30) umgeben ist, wobei das Rückschlusselement (30) radial außenseitig von einer Schutzschicht (36) aus einem Kunststoff vollständig ummantelt ist und wobei das Rückschlusselement (30) als geschlossenes Ringelement ausgebildet ist, wobei das Rückschlusselement (30) im Bereich eines in axialer Richtung zum Laufradabschnitt (12) orientierten Endes über den gesamten Umfang dichtend gegenüber dem Antriebsabschnitt (16) angeordnet ist,
a) wobei das Rückschlusselement (30) und der Antriebsabschnitt (16) im Bereich des in axialer Richtung zum Laufradabschnitt (12) orientierten Endes unmittelbar aneinander anliegend angeordnet sind
oder
b) wobei das Rückschlusselement (30) und der Antriebsabschnitt (16) im Bereich eines in axialer Richtung zum Laufradabschnitt (12) orientierten Endes voneinander beabstandet angeordnet sind, und wobei in dem verbleibenden Zwischenraum oder Spalt mindestens ein geeignetes Dichtelement eingesetzt ist.

2. Außenläufer-Rotor nach dem vorstehenden Anspruch, **dadurch gekennzeichnet, dass** das Rückschlusselement (30) eine obere Radial-Anlagefläche (42) aufweist, mit welcher das Rückschlusselement (30) über den gesamten Umfang an dem Antriebsabschnitt (16) anliegt.

3. Außenläufer-Rotor nach einem der vorstehenden Ansprüche, **dadurch gekennzeichnet, dass** das Rückschlusselement (30) eine untere Radial-Anlagefläche (44) aufweist, mit welcher das Rückschlusselement (30) über den gesamten Umfang an dem Antriebsabschnitt (16) anliegt.

4. Außenläufer-Rotor nach einem der vorstehenden Ansprüche, **dadurch gekennzeichnet, dass** die Außenkontur des Rückschlusselements (30) in einem sich über einen Teil der sich in axialer Richtung erstreckenden Länge einen Zylindermantelabschnitt (38) aufweist und sich ausgehend von dem Zylindermantelabschnitt (38) in axialer Richtung zum Laufradabschnitt (12) orientiert ein kegelstumpfartig ausgebildeter Abschnitt (54) anschließt.

5. Außenläufer-Rotor nach dem vorstehenden Anspruch, **dadurch gekennzeichnet, dass** die Dicke der Schutzschicht (36), welche das Rückschlusselement (30) im Bereich des Zylindermantelabschnitts (38) in radialer Richtung betrachtet außenseitig umgibt, um maximal 50% von der Dicke der Schutzschicht (36) abweicht, die den kegelstumpfartig ausgebildeten Abschnitt (54) in radialer Richtung betrachtet außenseitig umgibt.

6. Außenläufer-Rotor nach einem der vorstehenden Ansprüche, **dadurch gekennzeichnet, dass** an einem dem Laufradabschnitt (12) abgewandten Ende des Antriebsabschnitts (16) eine sich über den gesamten Umfang erstreckende Stufenkontur (46) mit einer sich in radialer Richtung erstreckenden Axial-Anlagefläche (48) und einer sich in axialer Richtung erstreckenden Radial-Anlagefläche (50) für das Rückschlusselement (30) ausgebildet ist.

7. Außenläufer-Rotor nach einem der vorstehenden Ansprüche, **dadurch gekennzeichnet, dass** das Rückschlusselement (30) kraftschlüssig auf dem Antriebsabschnitt (16) fixiert ist.

8. Außenläufer-Rotor nach einem der vorstehenden Ansprüche, **dadurch gekennzeichnet, dass** der Antriebsabschnitt (16) im Bereich der Radial-Anlagefläche (42, 44) eine zylindrische Außenkontur (40) aufweist.

9. Verfahren zur Herstellung eines Außenläufer-Rotors (10) nach einem der Ansprüche 1 bis 8, wobei in einem ersten Verfahrensschritt der Antriebsabschnitt (16) hergestellt wird und anschließend das mindestens eine Magnetelement (28) sowie das Rückschlusselement (30) gegenüber dem Antriebsabschnitt (16) positioniert werden, **dadurch gekennzeichnet, dass** ein Spritzgießwerkzeug derart gegenüber dem Antriebsabschnitt (16) mit dem mindestens einen Magnetelement (28) und dem Rückschlusselement (30) angeordnet wird, dass der Abstand zwischen einem Zylindermantelabschnitt (38) des Rückschlusselements (30) und einem ersten Abschnitt einer Innenfläche des Spritzgießwerkzeuges um maximal 50% von dem Abstand zwischen einem kegelstumpfartig ausgebildeten Abschnitt (54) des Rückschlusselements (30) und einem zweiten Abschnitt der Innenfläche des Spritzgießwerkzeuges abweicht und anschließend die Schutzschicht (36) mittels Spritzgießen zur Ummantelung des Rückschlusselements (30) in das Spritzgießwerkzeug gegeben wird.

10. Verfahren nach dem vorstehenden Anspruch, **dadurch gekennzeichnet, dass** das Spritzgießwerkzeug mindestens zweiteilig ausgebildet ist und ein erster Teil des Spritzgießwerkzeuges sowie ein zweiter Teil des Spritzgießwerkzeuges derart angeordnet werden, dass eine Werkzeugtrennebene (56) in radialer Richtung verläuft und die Werkzeugtrennebene (56) zwischen dem ersten Teil und dem zweiten Teil in axialer Richtung betrachtet in dem Übergangsbereich zwischen dem Zylindermantelabschnitt (38) und dem sich daran anschließenden, kegelstumpfartig ausgebildeten Abschnitt (54) des Rückschlusselements (30) angeordnet ist.

## Claims

1. Outer rotor of a pump, comprising an impeller section (12) having a plurality of impeller blades (14) and a drive section (16), in which is arranged at least one magnetic element (28) extending at least over a radially outer portion of the circumference of the drive section (16), such that the drive section (16) is at least dipole magnetized over the circumference; wherein the at least one magnetic element (28) is surrounded radially on the outside by a return element (30); wherein the return element (30) is fully sheathed radially on the outside by a protective layer (36) made of plastic; and wherein the return element (30) is designed as a closed ring element;
wherein
the return element (30), in the area of an end oriented in the axial direction relative to the impeller section (12), is arranged over the entire circumference so as to form a seal with respect to the drive section (16),
a) wherein the return element (30) and the drive section (16) are arranged directly abutting one each other in the region of the end oriented in the axial direction relative to the impeller section (12) or
b) wherein the return element (30) and the drive section (16) are arranged at a distance from one another in the region of an end oriented in the axial direction relative to the impeller section (12), and wherein at least one suitable sealing element is inserted into the remaining intermediate space or gap.

2. Outer rotor according to the preceding claim, **characterized in that** the return element (30) has an upper radial contact surface (42) with which the return element (30) abuts the drive section (16) over the entire circumference.

3. Outer rotor according to any one of the preceding claims, **characterized in that** the return element (30) has a lower radial contact surface (44) with which the return element (30) abuts the drive section (16) over the entire circumference.

4. Outer rotor according to any one of the preceding claims, **characterized in that** the outer contour of the return element (30) has a cylindrical shell section (38) in a length extending over a portion of the length in the axial direction and, starting from the cylinder shell section (38), oriented in the axial direction relative to the impeller section (12), adjoins a section (54) designed in the shape of a frustum.

5. Outer rotor according to the preceding claim, **characterized in that** the thickness of the protective layer (36) which externally surrounds the return element (30) in the area of the cylinder shell section (38), as viewed in the radial direction, deviates by at most 50% from the thickness of the protective layer (36) which externally surrounds the frustum-shaped section (54), as viewed in the radial direction.

6. Outer rotor according to any one of the preceding claims, **characterized in that,** on an end of the drive section (16) facing away from the impeller section (12), a step contour (46) extending over the entire circumference, with an axial contact surface (48) extending in the radial direction and a radial contact surface (50) extending in the axial direction, is formed for the return element (30).

7. Outer rotor according to any one of the preceding claims, **characterized in that** the return element (30) is non-positively fixed on the drive section (16).

8. Outer rotor according to any one of the preceding claims, **characterized in that** the drive section (16) has a cylindrical shell contour (40) in the region of the radial contact surface (42, 44).

9. Method for producing an outer rotor (10) according to any one of Claims 1 to 8, wherein, in a first method step, the drive section (16) is produced and then the at least one magnetic element (28) as well as the return element (30) are positioned opposite the drive section (16), **characterized in that** an injection molding tool is arranged opposite the drive section (16) with the magnetic element (28) and the return element (30) in such a way that the distance between a cylindrical shell section (38) of the return element (30) and a first section of an inner surface of the injection molding tool deviates by a maximum of 50% from the distance between a frustum-shaped section (54) of the return element (30) and a second section of the inner surface of the injection-molding tool, and the protective layer (36) is then provided in the injection molding tool by means of injection molding in order to encase the return element (30).

10. The method according to the preceding claim, **characterized in that** the injection molding tool is designed in at least two parts, and a first part of the injection molding tool and a second part of the injection molding tool are arranged such that a tool parting plane (56) runs in the radial direction, and the tool parting plane (56), as viewed in the axial direction, is arranged between the first part and the second part in the transition area between the cylindrical shell section (38) and the adjoining frustum-shaped section (54) of the return element (30).

## Revendications

1. Rotor extérieur d'une pompe, comprenant une section de roue mobile (12) avec plusieurs aubes de roue mobile (14) et une section d'entraînement (16), dans lequel au moins un élément magnétique (28) s'étendant au moins sur une partie côté externe radial de la circonférence de la section d'entraînement (16) est disposé de sorte que la section d'entraînement (16) soit magnétisée de manière au moins bipolaire sur la circonférence, l'au moins un élément magnétique (28) étant entouré côté externe radial par un élément de fermeture arrière (30), l'élément de fermeture arrière (30) étant totalement enveloppé côté externe radial par une couche de protection (36) en matière synthétique et l'élément de fermeture arrière (30) étant conçu comme un élément annulaire fermé, l'élément de fermeture arrière (30) étant disposé dans la zone d'une extrémité orientée en direction radiale par rapport à la section de roue mobile (12) sur toute la circonférence de manière étanche par rapport à la section d'entraînement (16),
a) l'élément de fermeture arrière (30) et la section d'entraînement (16) étant disposés dans la zone de l'extrémité orientée en direction axiale par rapport à la section de roue mobile (12) directement adjacents l'un à l'autre
ou
b) l'élément de fermeture arrière (30) et la section d'entraînement (16) étant disposés dans la zone d'une extrémité orientée en direction axiale par rapport à la section de roue mobile (12) à distance l'un de l'autre et un élément d'étanchéité adapté étant placé dans l'espace intermédiaire restant ou la fente restante.

2. Rotor extérieur selon la revendication précédente, **caractérisé en ce que** l'élément de fermeture arrière (30) présente une surface d'appui radiale supérieure (42), avec laquelle l'élément de fermeture arrière (30) repose sur toute la circonférence sur la section d'entraînement (16).

3. Rotor extérieur selon l'une quelconque des revendications précédentes, **caractérisé en ce que** l'élément de fermeture arrière (30) présente une surface d'appui radiale inférieure (44), avec laquelle l'élément de fermeture arrière (30) repose sur toute la circonférence sur la section d'entraînement (16).

4. Rotor extérieur selon l'une quelconque des revendications précédentes, **caractérisé en ce que** le contour externe de l'élément de fermeture arrière (30) présente une section d'enveloppe cylindrique (38) dans une longueur s'étendant sur une partie dans la direction axiale et une section formée en forme tronconique (54) se ramifie à partir de la section d'enveloppe cylindrique (38) orientée dans la direction axiale par rapport à la section de roue mobile (12).

5. Rotor extérieur selon la revendication précédente, **caractérisé en ce que** l'épaisseur de la couche de protection (36), qui entoure l'élément de fermeture arrière (30) dans la zone de la section d'enveloppe cylindrique (38) côté externe vue dans la direction radiale, diffère d'au plus 50 % de l'épaisseur de la couche de protection (36), qui entoure la section formée en forme tronconique (54) côté externe vue dans la direction radiale.

6. Rotor extérieur selon l'une quelconque des revendications précédentes, **caractérisé en ce que** sur une extrémité tournée à l'opposé de la section de roue mobile (12) de la section d'entraînement (16), un contour étagé (46) s'étendant sur toute la circonférence est formé avec une surface d'appui axiale (48) s'étendant dans la direction radiale et une surface d'appui radiale (50) s'étendant dans la direction axiale pour l'élément de fermeture arrière (30).

7. Rotor extérieur selon l'une quelconque des revendications précédentes, **caractérisé en ce que** l'élément de fermeture arrière (30) est fixé à force sur la section d'entraînement (16).

8. Rotor extérieur selon l'une quelconque des revendications précédentes, **caractérisé en ce que** la section d'entraînement (16) présente un contour externe cylindrique (40) dans la zone de la surface d'appui radiale (42, 44).

9. Procédé de fabrication d'un rotor extérieur (10) selon l'une quelconque des revendications 1 à 8, dans une première étape de procédé, la section d'entraînement (16) étant fabriquée et ensuite l'au moins un élément magnétique (28) ainsi que l'élément de fermeture arrière (30) étant positionnés par rapport à la section d'entraînement (16), **caractérisé en ce qu'un** outil de moulage par injection est disposé par rapport à la section d'entraînement (16) avec l'au moins un élément magnétique (28) et l'élément de fermeture arrière (30) de sorte que la distance entre une section d'enveloppe cylindrique (38) de l'élément de fermeture arrière (30) et une première section d'une surface interne de l'outil de moulage par injection diffère d'au plus 50 % de la distance entre une section formée en forme tronconique (54) de l'élément de fermeture arrière (30) et une seconde section de la surface interne de l'outil de moulage par injection et ensuite la couche de protection (36) est appliquée au moyen d'un moulage par injection sur l'enveloppe de l'élément de fermeture arrière (30) dans l'outil de moulage par injection.

10. Procédé selon la revendication précédente, **caractérisé en ce que** l'outil de moulage par injection est formé au moins en deux parties et une première partie de l'outil de moulage par injection ainsi qu'une deuxième partie de l'outil de moulage par injection sont disposées de sorte qu'un plan de joint d'outil (56) s'étende dans la direction radiale et le plan de joint d'outil (56) soit disposé entre la première partie et la deuxième partie vu dans la direction axiale dans la zone de transition entre la section d'enveloppe cylindrique (38) et la section formée en forme tronconique (54) qui vient se raccorder sur celle-ci de l'élément de fermeture arrière (30).
